# EUROPÄISCHE PATENTANMELDUNG

(11) **EP 1 600 743 A2**
(43) Veröffentlichungstag der Anmeldung: **30.11.2005**
(21) Anmeldenummer: 05103104.5
(22) Anmeldetag: 19.04.2005
(51) Int. Cl.: G01D 21/02, G01D 11/24

(54) **Einrichtung zum Messen von Druck und Temperatur**

(30) Priorität: 28.05.2004 DE 102004026181
(71) Anmelder: ROBERT BOSCH GMBH, 70442 Stuttgart (DE)
(72) Erfinder: Satzger, Peter, 86899, Landsberg a. Lech (DE)

(57) **Zusammenfassung**

Die Erfindung geht von einer Einrichtung (30) zum Messen von Druck und Temperatur von heißen Gasen aus. Es wird vorgeschlagen, dass ein Drucksensor (56) in einem gegen Überhitzen sicheren Abstand von den heißen Gasen in einem Gehäuse (52, 62) angeordnet ist und über eine Druckübertragungsleitung (54, 70), die einen kleinen Durchmesser aufweist, mit den heißen Gasen in Verbindung steht und an einer Auswerteeinheit (48) angeschlossen ist, die in dem gleichen Gehäuse (52, 62) untergebracht ist und an der über eine elektrische Leitung (46) ein Temperatursensor (44) im Bereich einer Mündung (72) der Druckübertragungsleitung (54, 70) angeschlossen ist.

## Beschreibung

### Stand der Technik

Die Erfindung geht von einer Einrichtung zum Messen von Druck und Temperatur nach dem Oberbegriff des Anspruchs 1 aus.

Bei bekannten Klimaanlagen verdichtet ein von einer Brennkraftmaschine angetriebener Kompressor ein dampfförmiges Kältemittel. Dieses erhitzt sich dabei und wird anschließend in einen Kondensator weitergeleitet, wo es mit Umgebungsluft abgekühlt wird und sich verflüssigt. Ein Expansionsventil spritzt die abgekühlte Flüssigkeit in einen Verdampfer ein, in dem das Kältemittel verdampft und dabei der von außen zugeführten Frischluft die für die Verdampfung erforderliche Wärme entzieht. Dadurch kühlt die Frischluft ab, wobei ihr die mitgeführte Feuchtigkeit als Kondensatwasser entzogen wird. Gleichzeitig wird dadurch eine gewünschte Trocknung der Frischluft erzielt. Die gekühlte und getrocknete Frischluft wird anschließend in einem Heizwärmetauscher auf die gewünschte Temperatur gebracht.

Künftig wird in den Klimaanlagen das herkömmliche Kältemittel R134a, ein teilfluorierter Kohlenwasserstoff, durch das natürliche Kältemittel Kohlendioxid (CO₂) ersetzt werden, das höhere Heiztemperaturen ermöglicht als R134a. In Klimaanlagen mit dem Kältemittel Kohlendioxid erfolgt die Wärmeabgabe nicht unter Kondensation des Kältemittels in einem Kondensator, sondern bei einem überkritischen Druck von bis zu 140 bar in einem Gaskühler. Dabei liegt die Temperatur zwischen 100 °C und 200 °C und ist damit wesentlich höher als bei dem Einsatz des Kältemittels R134a. Klimaanlagen mit dem Kältemittel Kohlendioxid sind z.B. aus der DE 101 23 830 A1 und der DE 198 06 654 A1 bekannt. Auf Grund des hohen Drucks und der hohen Temperatur ist es zweckmäßig, diese Größen mit einer Messeinrichtung zu erfassen.

### Vorteile der Erfindung

Nach der Erfindung ist ein Drucksensor in einem gegen Überhitzen sicheren Abstand von den heißen Gasen, z.B. von einem gasförmigen Kältemittel einer Klimaanlage, in einem Gehäuse angeordnet und steht über eine Druckübertragungsleitung, die einen kleinen Durchmesser aufweist, mit den heißen Gasen in Verbindung. Der Drucksensor ist an einer Auswerteeinheit angeschlossen, die in dem gleichen Gehäuse untergebracht ist, und an der über eine elektrische Leitung ein Temperatursensor im Bereich einer Mündung der Druckübertragungsleitung angeschlossen ist. Somit ist es möglich, mit einer einzigen Messeinrichtung an einer Anschlussstelle den Druck und die Temperatur gleichzeitig zu erfassen, selbst wenn diese, wie eingangs erwähnt, in einem hohen Bereich liegen. Da der Drucksensor einer geringeren Temperatur ausgesetzt ist als der Temperatursensor, der wegen der Trägheit der Wärmeübertragung in vorteilhafter Weise nahe dem zu messenden Kältemittel angebracht ist, kann ein kostengünstiges Sensorelement mit geringerer Temperaturbeständigkeit verwendet werden.

In Ausgestaltung der Erfindung verläuft die Druckübertragungsleitung mindestens teilweise durch ein Distanzgehäuse aus Kunststoff, das sich an das Gehäuse zur Aufnahme des Drucksensors und der Auswerteeinheit anschließt und mit einem Anschlussrohr verbunden ist, das gegenüber der Druckübertragungsleitung einen erheblich größeren inneren Durchmesser besitzt. Der Kunststoff ist temperaturbeständig und besitzt eine geringe Wärmeleitfähigkeit. Dadurch ist der Drucksensor wärmemäßig von dem Anschlussrohr entkoppelt. Bei typischen Anwendungen besitzt die Druckübertragungsleitung einen Innendurchmesser von 0,1 bis 3 Millimetern, vorzugsweise 1 Millimeter, und eine Länge zwischen 10 und 200 Millimetern, vorzugsweise 30 Millimeter. Je nach Auslegung wird das Drucksignal durch die Druckübertragungsleitung dynamisch etwas gedämpft, was bei einer Anordnung kurz hinter einem Kompressor vorteilhaft ist.

Um eine lange Druckübertragungsleitung in einem kurzen Distanzgehäuse unterzubringen, ist es zweckmäßig, dass die Druckübertragungsleitung im Distanzgehäuse gewendelt verläuft. Ferner kann die elektrische Leitung des Temperatursensors Raum sparend durch die Druckübertragungsleitung geführt sein. Dabei kann der Temperatursensor ein Stück weit in das Anschlussrohr hineinragen. Das Anschlussrohr kann vielgestaltig ausgeführt sein. So kann z.B. das Kältemittel durch das Anschlussrohr strömen, was jedoch nicht zwingend erforderlich ist. Ist das Anschlussrohr beispielsweise als Einschraubelement oder als Block ausgebildet, reicht es aus, wenn das Kältemittel an einer Öffnung des Anschlussrohrs vorbeiströmt.

Gemäß einer Ausgestaltung der Erfindung wird vorgeschlagen, dass das Gehäuse für den Drucksensor und die Auswerteeinheit Kühlrippen aufweist. In gleicher Weise können an dem Distanzgehäuse, insbesondere in der Nähe des Drucksensors, Kühlrippen vorgesehen werden. Zweckmäßigerweise werden diese an einem Zwischengehäuse angeordnet, das zwischen dem Gehäuse für die Auswerteeinheit und dem Distanzgehäuse liegt und vorzugsweise aus Metall gefertigt ist. Das Gehäuse, das Distanzgehäuse und das Zwischengehäuse können zu einer Baueinheit zusammengegossen sein.

Obwohl die Verwendung der erfindungsgemäßen Einrichtung nicht auf Klimaanlagen beschränkt ist, ist diese Anwendung besonders vorteilhaft, da hierfür eine kostengünstige und leicht montierbare Einrichtung wünschenswert ist. Sie kann bei dieser Verwendung in dem Kältemittelkreislauf zwischen einem Kompressor und einem Gaskühler angeordnet sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

Fig. 1 einen schematischen Aufbau einer Klimaanlage mit einer erfindungsgemäßen Einrichtung,
Fig. 2 einen schematischen Teillängsschnitt durch eine erfindungsgemäße Einrichtung,
Fig. 3 und Fig. 4 Varianten zu Fig. 2.

### Beschreibung der Ausführungsbeispiele

Eine Klimaanlage 10 umfasst einen Kompressor 12, einen Gaskühler 14, einen inneren Wärmetauscher 16, ein Expansionsventil 18 und einen Verdampfer 20. Diese Bauteile sind über einen Kältemittelkreislauf 38 miteinander verbunden, der vorzugsweise von Kohlendioxid als Kältemittel durchströmt wird. Die Strömungsrichtung 40 des Kältemittels ist durch Pfeile gekennzeichnet. Der Verdichter 12 fördert das Kältemittel zum Gaskühler 14. Dort wird es durch Frischluft aus der Umgebung abgekühlt, die von einem Ventilator 36 auf der Luftseite durch den Gaskühler 14 gefördert wird. Die Zuluft ist mit einem Pfeil 32 gekennzeichnet, während ein Pfeil 34 die Abluft symbolisiert. Das abgekühlte Kältemittel wird in dem inneren Wärmetauscher 16 weiter abgekühlt und durch das Expansionsventil 18 expandiert. Bei der Expansion entzieht es im Verdampfer 20 der Umgebungsluft Wärme. Die Umgebungsluft wird von einem Ventilator 36 gefördert, wobei die Zuluft ebenfalls mit 32 und die Abluft mit 34 bezeichnet ist. Das Kältemittel durchströmt nach dem Gaskühler 14 den inneren Wärmetauscher 16 und gelangt danach wieder zum Kompressor 12. Zwischen dem inneren Wärmetauscher 16 und dem Kompressor 12 ist ein Sammler 22 mit einem Ventil 24 und zwischen dem Kompressor 12 und dem Gaskühler 14 ein Ölabscheider 26 mit einem Ventil 28 angeordnet. Zum Erfassen des Drucks und der Temperatur nach dem Kompressor 12 und vor dem Gaskühler 14, ist zwischen diesen eine erfindungsgemäße Einrichtung 30 vorgesehen. Sie besitzt ein Anschlussrohr 42, das in diesem Fall vom Kältemittel durchströmt wird und Teil des Kältemittelkreislaufs 38 ist. Alternativ kann das Anschlussrohr 42 auch ein Einschraubelement sein, das in die Leitung des Kältemittelkreislaufs 38 eingeschraubt wird, und an dessen Öffnung das Kältemittel vorbeiströmt.

An das Anschlussrohr 42 schließt sich ein Distanzgehäuse 50 aus einem hitzebeständigen Kunststoff an, das einerseits mit dem Anschlussrohr 42 und andererseits mit einem Gehäuse 52 zur Aufnahme eines Drucksensors 56 und einer elektronischen Auswerteeinheit 48 fest verbunden ist. Der Drucksensor 56 in dem Gehäuse 52 ist über eine Druckübertragungsleitung 54 mit dem Anschlussrohr 42 verbunden. Die Druckübertragungsleitung 54 besitzt einen deutlich geringeren Querschnitt als das Anschlussrohr 42, dessen Durchmesser mit 74 bezeichnet ist.

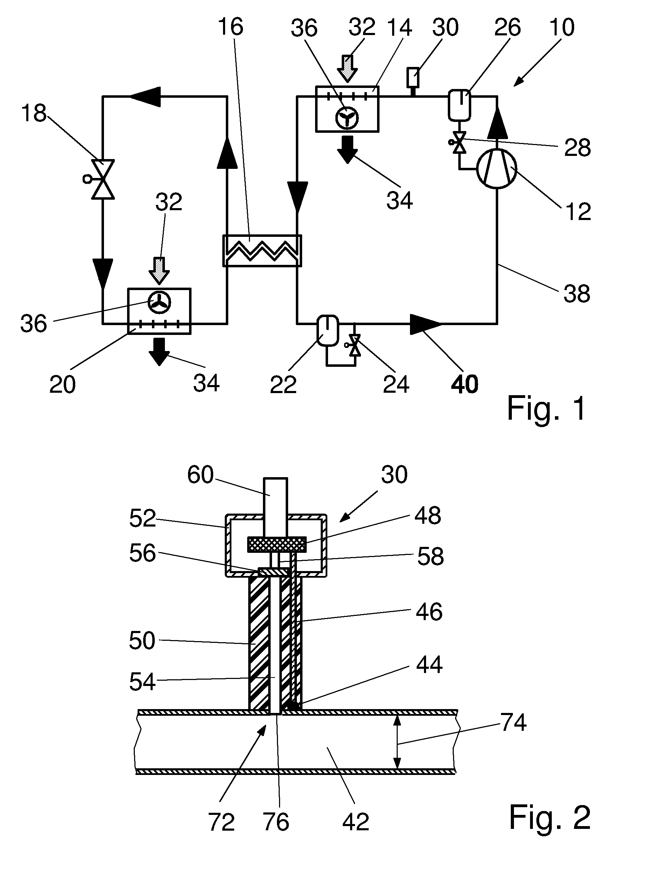

Im Bereich einer Mündung 72 der Druckübertragungsleitung 54 ist ein Temperatursensor 44, z.B. ein Widerstandsthermometer mit einem positiven Temperaturkoeffizienten (PCT) oder mit einem negativen Temperaturkoeffizienten (NTC), vorgesehen, der im Ausführungsbeispiel nach Fig. 2 an der Außenseite des Anschlussrohrs 42 anliegt. Er ist durch eine elektrische Leitung 46 mit der Auswerteeinheit 48 verbunden, die ihrerseits über Signalleitungen 58 mit dem Drucksensor 56 in Verbindung steht. Die Auswerteeinheit 48 wertet sowohl das Signal des Drucksensors 56 als auch das Signal des Temperatursensors 44 aus und stellt an einem Anschlussstecker 60 entsprechende Ausgangssignale zur Verfügung. Die Ausgangssignale können sowohl durch zwei analoge Signale als auch durch eine digitale Schnittstelle, z.B. LIN (Local Interconnect Network) zur Verfügung gestellt werden.

Durch das Distanzgehäuse 50 aus Kunststoff ist das Gehäuse 52 mit dem Drucksensor 56 gegenüber dem Anschlussrohr 42 wärmeisoliert. Der geringe Querschnitt der Druckübertragungsleitung 54 lässt lediglich einen Druckaufbau ohne nennenswerten Gasaustausch zu, sodass der Drucksensor 56 nicht durch hohe Temperaturen belastet wird. Demgegenüber ist der Temperatursensor 44 dicht am Anschlussrohr 42 angeordnet, sodass er ohne nennenswerte Verzögerung die Temperatur des Kältemittels erfassen kann. Bei der Ausführung nach Fig. 2 verläuft die elektrische Leitung 46 etwa parallel zur Druckübertragungsleitung 54 und ist wie diese in das Distanzgehäuse 50 aus Kunststoff eingegossen.

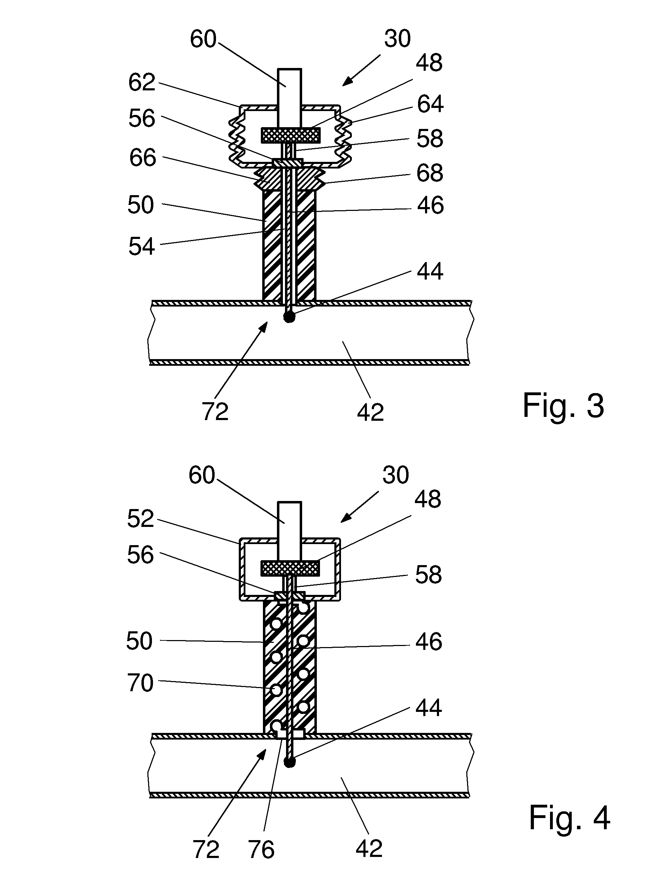

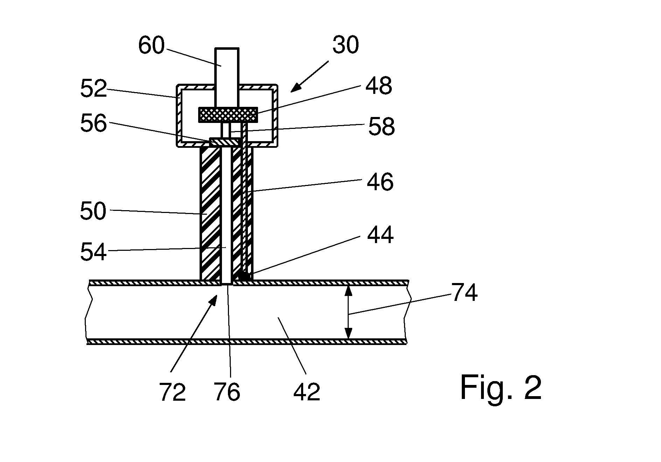

Bei der Ausführung nach Fig. 3 verläuft die elektrische Leitung 46 durch die Druckübertragungsleitung 54 und ragt mit dem Temperatursensor 44 ein Stück weit in das Anschlussrohr 42. Hierdurch ergeben sich räumliche Vorteile. Ferner wird die Temperatur des Kältemittels unmittelbar erfasst. Als Option kann ein Teil des Distanzgehäuses 50 als Zwischengehäuse 66 ausgebildet sein und zur besseren Kühlung des Drucksensors 56 Kühlrippen 68 besitzen. Außerdem wird es zweckmäßigerweise wegen der besseren Wärmeleitfähigkeit aus einem Metall gefertigt. Zur Unterstützung der Kühlwirkung kann auch das Gehäuse 62 mit Kühlrippen 64 versehen sein. Alle Einzelteile 60, 62, 56, 66, 50, 48, 44, 46, 42 sind zu einer Messeinheit fest miteinander verbunden.

Die Ausführung nach Fig. 4 unterscheidet sich von der Ausführung nach Fig. 2 dadurch, dass eine gewendelte Druckübertragungsleitung 70 im Distanzgehäuse 50 vorgesehen ist. Dabei kann die elektrische Leitung 46 durch den Kern der Wendel geführt werden. Der Temperatursensor 44 ragt wie bei der Ausführung nach Fig. 3 ebenfalls ein Stück weit in das Anschlussrohr 42.

Zur besseren Druckübertragung über die Druckübertragungsleitung 54 von ihrer Mündung 72 zum Drucksensor 56 kann die Druckübertragungsleitung 54 mit einem geeigneten Öl gefüllt sein. In diesem Fall ist die Druckübertragungsleitung 54 bzw. 70 zum Anschlussrohr 42 hin durch eine Membran 76 verschlossen.

## Patentansprüche

1. Einrichtung (30) zum Messen von Druck und Temperatur von heißen Gasen, **dadurch gekennzeichnet, dass** ein Drucksensor (56) in einem gegen Überhitzen sicheren Abstand von den heißen Gasen in einem Gehäuse (52, 62) angeordnet ist und über eine Druckübertragungsleitung (54, 70), die einen kleinen Durchmesser aufweist, mit den heißen Gasen in Verbindung steht und an einer Auswerteeinheit (48) angeschlossen ist, die in dem gleichen Gehäuse (52, 62) untergebracht ist und an der über eine elektrische Leitung (46) ein Temperatursensor (44) im Bereich einer Mündung (72) der Druckübertragungsleitung (54, 70) angeschlossen ist.

2. Einrichtung (30) nach Anspruch 1, **dadurch gekennzeichnet, dass** die Druckübertragungsleitung (54, 70) mindestens teilweise durch ein Distanzgehäuse (50) aus Kunststoff verläuft, das sich an das Gehäuse (52, 62) anschließt und mit einem Anschlussrohr (42) verbunden ist, das gegenüber der Druckübertragungsleitung (54, 70) einen erheblich größeren inneren Durchmesser (74) besitzt.

3. Einrichtung (30) nach einem der Ansprüche 1 oder 2, **dadurch gekennzeichnet, dass** die Druckübertragungsleitung (70) im Distanzgehäuse (50) gewendelt verläuft. (Fig. 4)

4. Einrichtung (30) nach einem der vorhergehenden Ansprüche, **dadurch gekennzeichnet, dass** die elektrische Leitung (46) durch die Druckübertragungsleitung (54) geführt ist und der Temperatursensor (44) in das Anschlussrohr (42) ragt.

5. Einrichtung (30) nach Anspruch 4, **dadurch gekennzeichnet, dass** die elektrische Leitung (46) im Zentrum der Wendel der Druckübertragungsleitung (70) verläuft.

6. Einrichtung (30) nach einem der vorhergehenden Ansprüche, **dadurch gekennzeichnet, dass** das Gehäuse (62) Kühlrippen (64) aufweist.

7. Einrichtung (30) nach einem der vorhergehenden Ansprüche, **dadurch gekennzeichnet, dass** zwischen dem Gehäuse (52, 62) und dem Distanzgehäuse (50) ein Zwischengehäuse (66) vorgesehen ist, das Kühlrippen (68) besitzt.

8. Einrichtung (30) nach Anspruch 7, **dadurch gekennzeichnet, dass** das Zwischengehäuse (66) aus Metall gefertigt ist.

9. Einrichtung (30) nach einem der vorhergehenden Ansprüche, **dadurch gekennzeichnet, dass** die Druckübertragungsleitung (54, 70) mit Öl gefüllt und an ihrer Mündung (72) durch eine Membran (76) verschlossen ist.

10. Einrichtung (30) nach einem der vorhergehenden Ansprüche, **gekennzeichnet** wie die Verwendung in einer Klimaanlage (10).

11. Einrichtung (30) nach Anspruch 9, **dadurch gekennzeichnet, dass** sie in einem Kältemittelkreislauf (38) zwischen einem Kompressor (12) und einem Gaskühler (14) angeordnet ist.
